# EUROPEAN PATENT SPECIFICATION

(11) **EP 1 710 068 B1**
(45) Date of publication and mention of the grant of the patent: **16.06.2010**
(21) Application number: 04705824.3
(22) Date of filing: 28.01.2004
(51) Int. Cl.: B29C 45/16, B29D 23/20, B65D 35/08, B29L 23/20

(54) **MANUFACTURE OF TUBES IN FLEXIBLE MATERIALS BY PRIOR INJECTION OF THE TUBE BODY WITH LABELLING IN THE MOULD**
HERSTELLUNG VON RÖHREN AUS FLEXIBELEM KUNSTSTOFF DURCH SPRITZGIESSEN UND IN DER FORM-ETIKETTIERUNG
PROCEDE DE FABRICATION DE TUBES EN MATERIAUX FLEXIBLES PAR INJECTION PREALABLE D'UNE JUPE AVEC UN ETIQUETAGE DANS UN MOULE

(43) Date of publication of application: 11.10.2006
(73) Proprietor: Tuboplast Hispania, S.A., 01510 Minao Barren (ES)
(72) Inventor: FERNÁNDEZ DE MENDIOLA QUINTANA, Javier, E-01008 Vitoria-Alava (ES); VALPUESTA LANDA, Juan Ignacio, E-01007 Vitoria-Alava (ES)
(74) Representative: Urteaga Simarro, José Antonio
(86) International application number: PCT/ES2004/000034
(87) International publication number: WO 2005/072931

(56) References cited:
- EP-A- 1 108 516
- WO-A-03/099544
- US-A- 6 127 011
- US-B1- 6 547 094
- PATENT ABSTRACTS OF JAPAN vol. 0186, no. 36 (M-1715), 5 December 1994 (1994-12-05) -& JP 06 246777 A (DAINIPPON PRINTING CO LTD; others: 01), 6 September 1994 (1994-09-06)

## Description

This invention relates to the manufacturing technique used to produce tubes made of flexible materials of the kind used to hold cosmetics, creams, etc. and which are composed mainly of a body and a head and provided with labels or other decorative elements.

The above-mentioned flexible tubes usually have a composition that can be defined essentially into two parts: firstly, the body of the tube, which is generally cylindrical and open at its upper and lower ends, and secondly the head or top cover, whose purpose is to close and seal one of the open ends of the body, and which includes a neck through which the final contents of the tube can be extracted and onto which the sealing cap can be fitted.

At present, there are a many methods of manufacturing tubes consisting of a body and a head in flexible materials. Most of these methods are made up of these phases:
- manufacture of the tube, or creation of the body, the head and the other component parts,
- decoration of the tube, or the addition of texts, drawings, or other decorative motifs,
- capping of the tube, or connection of the cap to the head of the tube,
- packing of the capped tube, or insertion of one or several tubes into boxes or similar for transport.

The tube capping and packing processes are usually performed on capping and packing machines. As regards the manufacture and decoration of the tube, there are many known techniques, of which the following are the main ones:
A) Manufacture of the tube by parts: manufacture of the body by extrusion, with the head being added by injection and with decoration performed by printing.
B) Manufacture of the complete tube by injection, with decoration carried out by labelling in the mould.
C) Manufacture of the complete tube by injection, with decoration carried out by printing.

The first of the above techniques, or technique A) is the one in which the body and the head of the tube are manufactured separately, more specifically with the body being manufactured first by extrusion and the head being added to the body later by an process of injection. This technique shows some advantages if compared with other techniques in which the complete tube, body and head, is injected simultaneously in one single mould. These advantages include the fact that the procedure and the extrusion machine which are used in manufacturing the body do not depend on the kind of head which will be added later, but only on the characteristics required of the body. It is therefore possible to manufacture bodies for different heads by using the same procedure and extrusion machine configuration.

In this manufacturing technique, with the body and head made separately, the tube decoration procedure is carried out by means of a printing machine that prints directly onto the tube once the head has been injected, or onto the body prior to attachment of the head, depending on the shape of the tube. This is due to the fact that the printing machine usually used requires the object that it prints on to have rotational symmetry, because the object is rotated during printing. Therefore, if the tube which is to be manufactured is cylindrical, i.e. if it has rotational symmetry, it is a common practice to apply the printing onto the complete tube, with the head attached. However, if the final tube is not cylindrical, but rather elliptical or some other shape which does not have rotational symmetry, the printing is usually applied onto the body before the injection of the head, because symmetry is lost during the injection of the head, whereas the body is still symmetrical in this phase and suitable for being submitted to the printing phase.

In addition to the fact that the printing process, and therefore the overall tube assembly process, depends on the shape of the tube, the printing as carried out has additional disadvantages, such as the high cost of the printing machines, their slowness, their improvable quality and their lack of versatility.

This lack of versatility of the printing machines means that in the case of manufacturing a tube with more complex decoration, such as silk-screening, heat-sealing, etc., this decoration has to be applied onto the tube on different machines, which must also be situated off the assembly line, due to the fact that, on the one hand, this decoration is usually carried out at a lower rate than the speed of the line and, on the other hand, the integration of these operations into the line would means increasing the complexity of the process and its setting-up.

In techniques B) and C), the complete tube is manufactured in one single part by injection. To this effect, the patent US 6547094 B1 is known, derived from patent WO 9846409 A1, which claims the manufacture by injection of flexible items with thin walls, of the type produced in one single part and which include an integrated closer, which therefore is also present in the mould, together with the body of the item.

This unitary manufacture of body and head raises some disadvantages if compared with the manufacture done separately as defined in technique A), such as the following: the number of moulds increases enormously when parts with different shapes are manufacture, because if there is a small variation in the head, it means that the complete mould has to be replaced, and vice versa. In addition, the manufactured tube does not offer any versatility, i.e. it can not be modified later in order to take different shapes, etc.

On the other hand, technique C), as it carries out the decoration of the tube by means of a printing process in a machine for this purpose, has identical disadvantages as regards the quality and the times and costs of decoration as in technique A), which is analogous in this respect.

A main objective of this invention is to define a manufacturing procedure for tubes made of flexible materials that noticeably reduces manufacturing costs and times. In order to do this, the procedure seeks to reduce the number of machines involved in the manufacturing process, as well as to reduce the number of skilled personnel required. Moreover, with regard to the above, an additional objective is to eliminate any process that takes place outside the continuous assembly line.

On the other hand, it seeks to provide an assembly procedure for tubes made of flexible materials which is common for tubes of all shapes, whether they have rotational symmetry or not.

Another objective of the invention is to increase the quality of the decoration on the tube and therefore improve the appearance of the end product.

In order to achieve the above objectives, the invention defines a single manufacturing procedure for tubes made of flexible materials which consist of a body and head, independently of the symmetry of the final tube, in the following way:
- Firstly, the body of the tube is manufactured in an injection machine, with the final decoration of the tube being carried out by means of a labelling process during moulding in this phase and simultaneously with the injection itself. In order to do this, the injection machine for the tube bodies is fed with decorative elements or labels, which can contain not only texts but also drawings, silk screening, heat sealing or other kinds of decorative motifs.
- Following this, and without needing it to be removed from the continuous assembly line for later decoration, the already decorated body of the tube passes through an injection machine, in which the head of the tube is injected onto it.
- Finally, the tube, composed of the body and the head, and already decorated, is capped and packed in accordance with the usual procedures.

The procedure according to the invention fulfils the objectives established, offering many advantages over already known techniques.

With regard to the techniques that manufacture the body and the head of the tube separately, a reduction is achieved in both the manufacturing times and in the costs, as the extrusion, printing and alternative decoration (silk-screening, etc.) processes and machines used in the techniques mentioned above are replaced by a single process and injection machine, to produce the body with the decoration incorporated.

The reduction in machinery also leads to a reduction in the skilled personnel required and, therefore, to a greater degree of automation, thus reducing the risk of faults.

As regards the techniques that carry out the decoration by means of printing in a machine for this purpose, and which require alternative processes for other kinds of decoration, by means of the procedure in accordance with the invention, it is possible to achieve the complete decoration of the tube in one single process, and to obtain decoration of a noticeably higher quality and versatility than that provided by printing machines, silk-screening, etc. due to the advanced nature of printing techniques on labels in relation to direct printing on tubes.

On the other hand, and taking into account that the materials used for manufacturing tubes are usually transparent, if opaque tubes are manufactured, the opaqueness can be provide by the label or decorative elements applied during moulding. In this way, it is not necessary to add colourant to the tube, thus achieving an important saving on colourant.

Moreover, the effects of possible errors in printing are minimised, because printing is performed on labels instead of on the tube, which is a part with a higher added value.

With regard to the techniques for manufacturing the complete tube by injection, the invention has the advantage that at the end of the initial phase in the manufacturing process, a body without a head has been produced, which can then be used for a wide variety of head shapes and sizes, which is not possible with the previously mentioned techniques, in which the tube obtained in the single injection machine is one single model and does not allow modifications in shape.

In order to complement the above description, the following figures are attached for illustrative purposes:
- Figure 1 shows the current manufacturing procedure for cylindrical tubes.
- Figure 2 shows the current manufacturing procedure for tubes without rotational symmetry.
- Figure 3 represents the current manufacturing procedure for injection of the complete tube and labelling in the mould.
- Figure 4 represents the procedure in accordance with patent US 6547094 B1.
- Figure 5 represents the procedure in accordance with the invention.

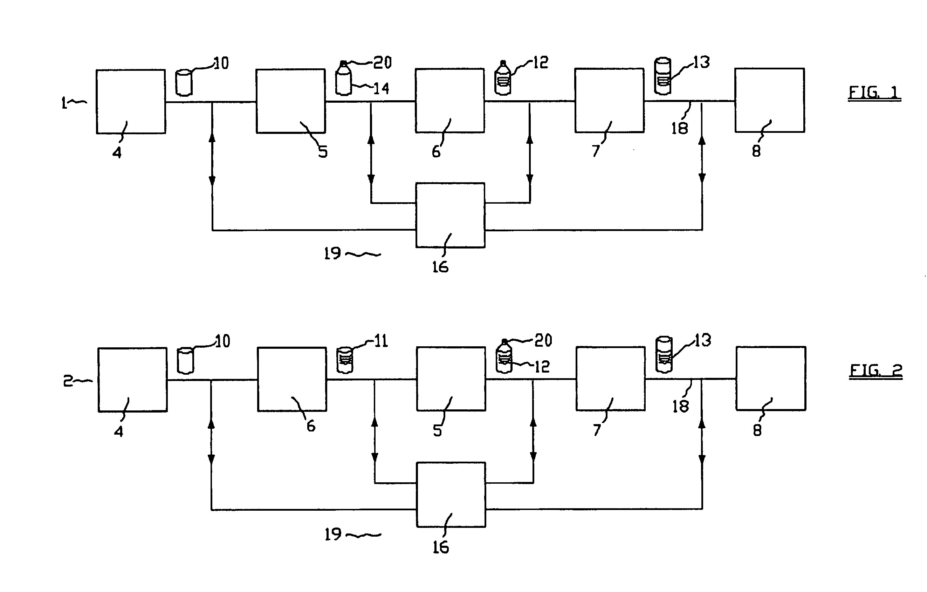

In Figure 1 we can observe the current procedure (1) for manufacturing cylindrical tubes, consisting mainly of a continuous assembly line (18) and an off-line assembly phase (19). On the continuous assembly line (18), the process begins with the manufacture of the body of the tube (10), which is a part made of flexible material and open at its upper and lower ends, in an extrusion machine (4). After this, there is an injection machine (5) that places the head (20) of the tube, by injection, onto the body (10), thus forming the complete tube (14). The printing machine (6) prints the texts, lettering, drawings, etc. onto the tube. The capping machine (7) places the cap onto the printed tube (12), which is then packed in the corresponding machine (8), thus finishing the procedure.

Parallel to this, there are one or more machines that perform the alternative decoration (16) of the body (10): silk-screening, heat-sealing, etc. These machines are located outside the continuous assembly line (18) and can work on the body or tube in any condition, after which this item, once decorated with the alternative decoration, is returned to the assembly line.

Figure 2 shows the procedure for manufacturing non-cylindrical (elliptical, etc.) tubes, i.e. tubes without rotational symmetry, which differs from the previous procedure mainly in that the injection (5) and printing (6) processes are inverted. Therefore, in this case the printing (6) is carried out on the body (10), whereas the injection in order to attach the head (20) is carried out on the decorated body (11).

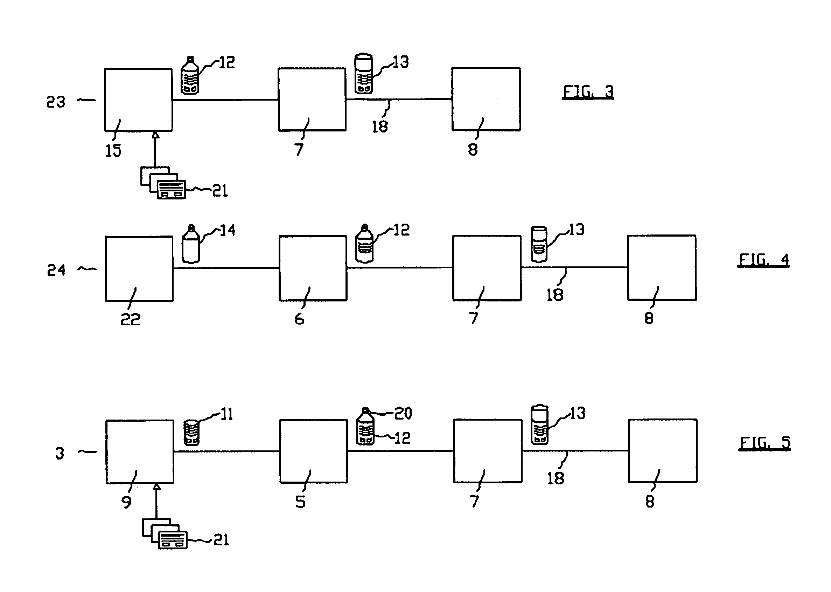

In Figure 3 it is possible to observe the procedure (23) for manufacturing the complete tube with labelling in the mould, according to which the already decorated complete tube (12), composed of body and head, is formed in the first injection machine (15), with labelling taking place in the mould. In order to carry out the labelling in the mould, the injection machine (15) is fed with previously printed decorative elements (21). The procedure finishes with the capping (7) and packing (8) of the tube, like in the previous procedures.

Figure 4 represents the procedure (24) for manufacturing tubes made of flexible materials in accordance with an embodiment of patent US 6547094 B1, according to which the complete tube (14) is manufactured initially by injection (22) in one single part, already composed of the body and the head. The decoration of the tube is carried out next in a printing machine (6), from which the complete decorated tube (12) is obtained. As with the previous procedures, the tubes is finally capped (7) and packed (8).

In Figure 5 it is possible to appreciate the procedure for manufacturing tubes made of flexible materials in accordance with the invention, formed only by a continuous assembly line (18) capable of manufacturing tubes made of flexible materials with standard decoration or alternative decoration (silk-screening, heat-sealing, etc.). The assembly line (18) consists mainly of an injection machine (9) with labelling in the mould, for which this machine is fed with the decorative elements (21) and the fully decorated body is obtained at the machine outlet. After this a second injection (5) is executed.
The decorated tube body (11) is finally subjected to the capping (7) and packing (8) phases.

## Claims

1. Procedure (3) for manufacturing tubes made of flexible materials, comprising a body (11) and a head (20), in which the body (11) is an approximately prism-shaped element with a circular, elliptical or other cross section, which forms the body of the tube and which is open at its opposite ends, and with the head (20) being a cover that closes off at least one of the open ends of the body (11), and in which this head (20) can have elements to release or displace the contents of the tube and for caps to be fixed onto the tube, with this procedure (3) including the following phases:
- manufacture of the body (11) of the tube in a first injection process in a purpose made injection machine (9), with decoration of the tube being carried out during this phase by means of a in-mould labelling process, using previously-prepared decorative elements (21), which are fed into the injection machine (9),
**characterized in that** it includes the
- manufacture of the head (20) of the tube, by injecting the said head (20) onto the body (11) of the tube, which has already been decorated in the purpose made injection machine (9), in a second injection process in a second injection machine (5).

2. Procedure (3), according to claim 1, further comprising the step of capping (7) the tube, which comprises the body (11) and head (20) and is already decorated.

3. Procedure (3), according to claim 1, further comprising the step of packing (8) the tube.

## Patentansprüche

1. Verfahren (3) zur Herstellung von Rohren aus flexiblen Materialien, das ein Gehäuse (11) und ein Kopfteil (20) umfasst, wobei das Gehäuse (11) ein annähernd prismaförmiges Element mit kreisförmigem, elliptischem oder anderem Querschnitt ist, das das Gehäuse des Rohres bildet und an seinen entgegengesetzten Enden offen ist, wobei der Kopfteil (20) eine Abdeckung ist, die mindestens eines der offenen Enden des Gehäuse (11) absperrt, und dieser Kopfteil (20) Elemente aufweisen kann, die den Inhalt des Rohres freigeben oder verschieben und für Deckel, die an das Rohr befestigt werden, wobei dieses Verfahren (3) die folgenden Phasen umfasst:
- Herstellung des Gehäuses (11) des Rohres in einem ersten Spritzgießverfahren mit einer eigens für diesen Zweck erzeugten Spritzgießmaschine (9), wobei die Dekoration des Rohres während dieser Phase mit Hilfe eines In-Mould-Etikettierungsverfahrens vorgenommen wird, unter Verwendung von vorher präparierten dekorativen Elementen (21), die in die Spritzgießmaschine (9) eingegeben werden,
**dadurch gekennzeichnet, dass** es Folgendes umfasst:
- Herstellung des Kopfteils (20) des Rohres durch Spritzen von besagtem Kopfteil (20) auf das Gehäuse (11) des Rohres, das bereits mit der eigens für diesen Zweck erzeugten Spritzgießmaschine (9) dekoriert wurde, und zwar in einem zweiten Spritzgießverfahren in einer zweiten Spritzgießmaschine (5).

2. Verfahren (3), in Übereinstimmung mit Anspruch 1, das zudem den Schritt der Abdeckung (7) des Rohres umfasst, welches das Gehäuse (11) und das Kopfteil (20) umfasst und bereits dekoriert ist.

3. Verfahren (3), in Übereinstimmung mit Anspruch 1, des zudem den Schritt der Verpackung (8) des Rohres umfasst.

## Revendications

1. Procédé (3) de fabrication de tubes en matériaux souples, comprenant un corps (11) et une tête (20), où le corps (11) est un élément en forme de prisme approximative avec une section transversale circulaire, elliptique ou quelqu'autre, qui forme le corps du tube et qui est ouverte aux extrémités opposées, et la tête (20) étant un couvercle qui ferme au moins l'une des extrémités ouvertes du corps (11), où cette tête (20) peut être munie d'éléments pour libérer ou déplacer les contenus du tube et pour fixer des bouchons sur le tube, ce procédé (3) comprenant les phases suivantes:
- fabrication du corps (11) du tube dans un premier procédé d'injection dans une machine à injection (9) conçue à cet effet, la décoration du tube étant réalisée pendant cette phase au moyen d'un processus d'étiquetage dans le moule, avec des éléments décoratifs (21) préparés à l'avance qui sont introduits dans la machine à injection (9).
**caractérisé par le fait qu'**il comprend la
- fabrication de la tête (20) du tube, en injectant cette tête (20) sur le corps (11) du tube, qui a déjà été décoré dans la machine à injection (9) conçue à cet effet, lors d'un second procédé d'injection dans une seconde machine à injection (5).

2. Procédé (3) conformément à la revendication 1, comprenant ensuite la phase de fermeture (7) du tube, qui comprend le corps (11) et la tête (20) et est déjà décoré.

3. Procédé (3) conformément à la revendication, comprenant ensuite la phase de conditionnement (8) du tube.
